# EUROPEAN PATENT SPECIFICATION

(11) **EP 0 470 785 B1**
(45) Date of publication and mention of the grant of the patent: **06.07.1994**
(21) Application number: 91307151.0
(22) Date of filing: 02.08.1991
(51) Int. Cl.: B29D 30/68

(54) **Tyre regrooving aid**
Werkzeug zum Erneuern von Reifenprofilen
Dispositif de rerainurage de pneus

(30) Priority: 04.08.1990 GB 9017138; 04.08.1990 GB 9017139
(43) Date of publication of application: 12.02.1992
(73) Proprietor: SUMITOMO RUBBER INDUSTRIES LIMITED, Kobe-shi Hyogo-ken (JP)
(72) Inventor: Kemp, Ian, Tamworth, Staffordshire (GB)
(74) Representative: Stewart, Charles Geoffrey

(56) References cited:
- GB-A- 1 041 060
- GB-A- 1 068 789
- US-A- 2 816 364
- US-A- 3 626 599
- TECHNICAL DIGEST no. 24, October 1971, pages 23 - 24; J. O. LANDIS JR.: 'Gauge for measuring the threaded depth of holes'

## Description

This invention relates to a tyre regrooving aid and in particular to a device to assist in setting the regrooving blade to the correct depth.

Most commercial vehicle tyres and in particular truck tyres are designed with sufficient thickness of rubber between the base of the tread pattern grooves and the outermost breaker ply to allow regrooving which maximises the mileage obtained from the tread rubber provided in each tyre.

Most tyre manufacturers recommend that tyres should be regrooved when 2-3mm of the original pattern remains, and issue guidelines as to regrooving patterns and blade settings to be used to ensure that sufficient thickness of rubber remains over the outermost breaker ply after regrooving. Regrooving is carried out by a hand operated hot-knife grooving tool and it is imperative that the blade should not cut down to the main tread reinforcing breaker layer as in that case water is allowed in and dangerous breaker corrosion rapidly occurs. The regrooving blade is set by loosening the blade clamping and moving the blade such that the specified blade length, measured using a rule or some other suitable scale, projects below the sole plate of the regrooving tool. However it is not possible to accurately pre-state the depth to which the regrooving blade must be set because the precise pattern depth remaining when any particular tyre is to be regrooved is not known. Furthermore tyre tread wear is rarely distributed evenly over the whole tread surface and it is sometimes the case that in some areas of the tread the pattern may have worn off completely whilst the remainder of the tread still has the recommended pattern depth remaining. Indeed once the pattern has disappeared from an area of the tread it is not easy to determine how much further wear of the underpattern rubber has occurred. In such cases regrooving the tyre according to the manufacturer's guidelines would certainly result in the regrooved pattern being closer to the breaker play than desired in these bald areas and there is the distinct possibility that the regrooving blade may contact the breaker ply. GB-A-1 068 789 discloses a tyre tread depth gauge and forms the basis for the preamble of Claim 1.

This problem makes regrooving at best uncertain and a percentage of attempted regroovings result in breaker damage and it is then necessary to send the tyre for remoulding. If corrosion has occurred it may be necessary to remove at least the top breaker layer. Extensive corrosion may render the tyre unsuitable even for retreading.

It is an object of the present invention to provide means to set a regrooving blade positively and accurately to the correct depth for a tyre, without measurement or calculation of the pattern depth remaining, by reference to part of the tyre which is unaffected by tread wear such as the base of a tread groove or the outermost breaker ply.

According to one aspect of the invention a tyre regrooving aid comprises a main body having a lower surface for contacting a tyre tread surface and an aperture to accommodate a tyre regrooving tool blade adjacent to an abutment to contact the regrooving tool body, a probe having a first end having a tip projecting beneath the lower surface of the main body, the probe being slidably mounted in the main body and having a second end operatively connected to a movable regrooving blade setting member adjacent to the aperture, the setting member having means to retain its relative position to the main body corresponding to the probe projecting distance measured between the probe tip and the low surface contacting the tread surface when the regrooving aid is removed from the tyre so that the dimensional relationship between the setting member and the probe provides that the regrooving blade setting distance is that required to regroove a tyre and a regrooving tool can have its blade depth set by inserting the blade into the aperture to contact the setting member.

The means to retain the relative positions may comprise friction means or a mechanical lock such as a ratchet. The degrees of retention in the two directions of movement are preferably different with the retention in the direction of movement when applied to the tyre the smaller of the two. In this case the ratchet may have differently shaped teeth in the two directions.

The probe tip may be blunt to contact the base of any remaining pattern groove in which case the dimensional relationship between the setting member and the probe provides that the regrooving blade setting distance is equal to the probe projecting distance plus the desired regrooving depth. The blunt probe tip is particularly used in the case that some tread pattern remains around the entire circumference of the tyre.

Alternatively the pattern base feature to be contacted may be a special regroove depth indicator moulded into the base of a groove in which case the setting distance is equal to the probe projecting length. In this case the probe may be a very narrow probe so that it can reach the bottom of regroove depth indicator.

Preferably setting means are provided to enable the probe to be set to its maximum projecting length beneath the lower surface of the main body in order that the regrooving aid can be reset before use.

Preferably the probe tip is rounded so that it may slide along the base of the tyre tread groove.

More preferably the probe tip is a roller ball.

Alternatively the probe tip may be pointed for penetrating the tyre tread rubber to the depth of the outermost breaker ply. In this case the dimensional relationship between the setting member and the probe provides that the regrooving blade setting distance is equal to the probe projecting distance minus the thickness of rubber to be left covering the breaker after regrooving. The pointed probe tip is particularly used in the case where the tread pattern has completely disappeared from at least one area of the tyre.

Further aspects of the present invention will become apparent from the following description, by way of example only, of some embodiments in conjunction with the attached diagrammatic drawings, in which:-
Figure 1A shows a schematic sectional view of a regrooving aid according to one embodiment of the present invention;
Figure 1B is a scrap view showing enlarged detail of the engagement means between the main body and the blade setting member of the regrooving aid of Figure 1A;
Figure 2 shows the relationship of the regrooving blade resetting distance to the probe projecting distance and the desired regrooving depth in the regrooving aid of Figure 1;
Figure 3 is diagram showing the setting of a regrooving tool blade using the regrooving aid of Figure 1A;
Figures 4-10 show further embodiments of means for retaining the relative positions of the setting member and/or the probe and the main body of the regrooving tool of the present invention.
Figures 11-13 show a further embodiment of the present invention having a probe with a pointed end for contacting a tyre breaker.

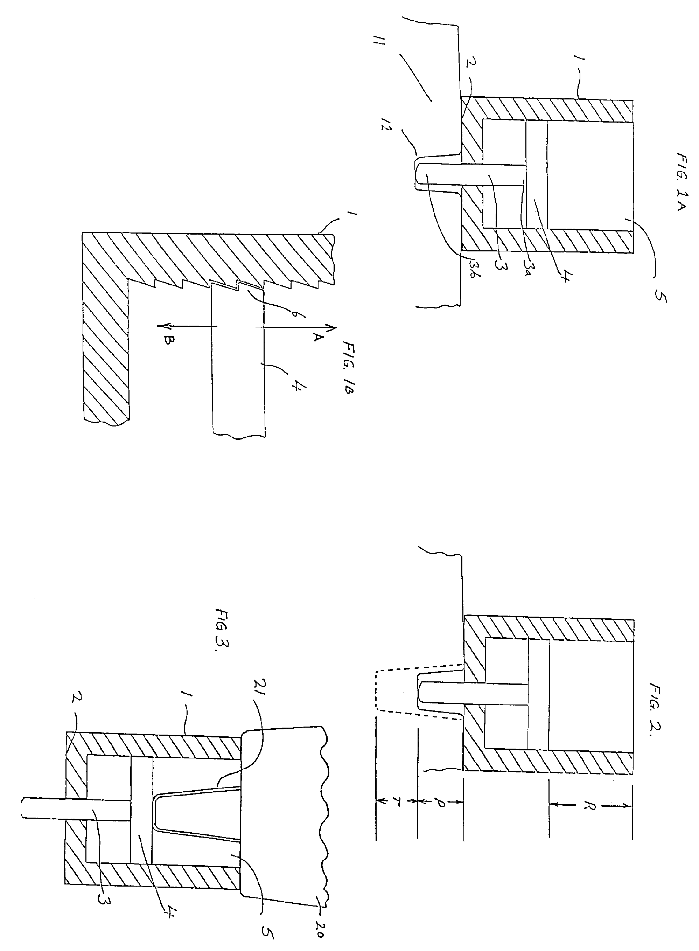

In the first embodiment the regrooving aid shown in Figure 1 comprises a circular main body 1 having a lower surface 2, for contacting a tyre tread surface 11, with a small central circular aperture. A probe 3 is slidably mounted in the circular aperture and has one end 3a projecting beneath the lower surface 2 so that its pointed tip may contact the base of a tyre tread groove 12. The other end of the probe 3b is connected to a circular blade setting member 4 which can move in both directions within the main body 1. The position of the setting member 4 within the main body 1 is retained by friction between the contacting faces of the two parts.

The friction between the main body 1 and the setting member 4 may be provided by a ratchet action of profiled teeth, as shown in Figure 1B, over all or part of the contacting surface. It will be understood that in order for the setting member 4 to be able to move in both directions A and B with such a ratchet that the edge region 6 would incorporate a spring loaded mechanism or that the setting member be deformable to a degree that allows the teeth to slide over each other.

This particular arrangement of profiled teeth allows relatively easy movement in direction A in response to the probe contacting the groove base whereas movement in the opposite direction B as required to reset the regrooving aid requires a much greater force.

The elements of the regrooving aid are arranged so that the distance R between the blade setting member 4 and that part of the main body which contacts the regrooving tool sole plate is equal to the length P of the probe projecting beneath the main body lower surface 2 plus the desired regrooving depth r, as shown in Figure 2.

The method by which the regrooving aid of Figure 1A may be used for the setting of a regrooving tool blade will now be described.

The regrooving aid is first reset by applying pressure to the upper surface of the setting member 4 to push the probe to its maximum projecting length. The regrooving aid is then positioned above the tyre tread surface so that the probe tip 36 contacts the tread pattern groove base and then pressed down until the lower surface 2 of the main body is in contact with the tread surface adjacent to the groove. In the case where the tread pattern groove is continuous around the tyre periphery the regrooving aid may be moved along the groove keeping the probe tip 36 in contact with the groove base and the lower surface 2 in contact with the tread surface. Where there is no continuous circumferential groove the regrooving aid is removed from the first position and without resetting is applied to as many other positions as possible around the tyre periphery. In either case the position of the setting member will only alter if the probe encounters a pattern depth which is less than any previous depth. Thus after the regrooving aid has been used at all points around the tyre surface the retained position of the setting member corresponds to the minimum pattern depth remaining on the tyre. The regrooving blade 21 can then be set by loosening its clamp and pushing it against the setting member 4 through the aperture 5 until the sole plate of the regrooving tool 20 contacts the main body 1 as shown in Figure 3. The clamp is then closed and the regrooving blade is set ready for use.

To facilitate ease of movement in the groove base the probe tip 36 may comprise a rollerball.

Figures 4-10 show other embodiments of the present invention where the means for retaining the relative position of the setting member and the main body is by means of a mechanical lock operating on the probe. Here the probe is locked and unlocked by a deformable probe locking part 31 which is operated from outside of the main body by means of a push rod 32.

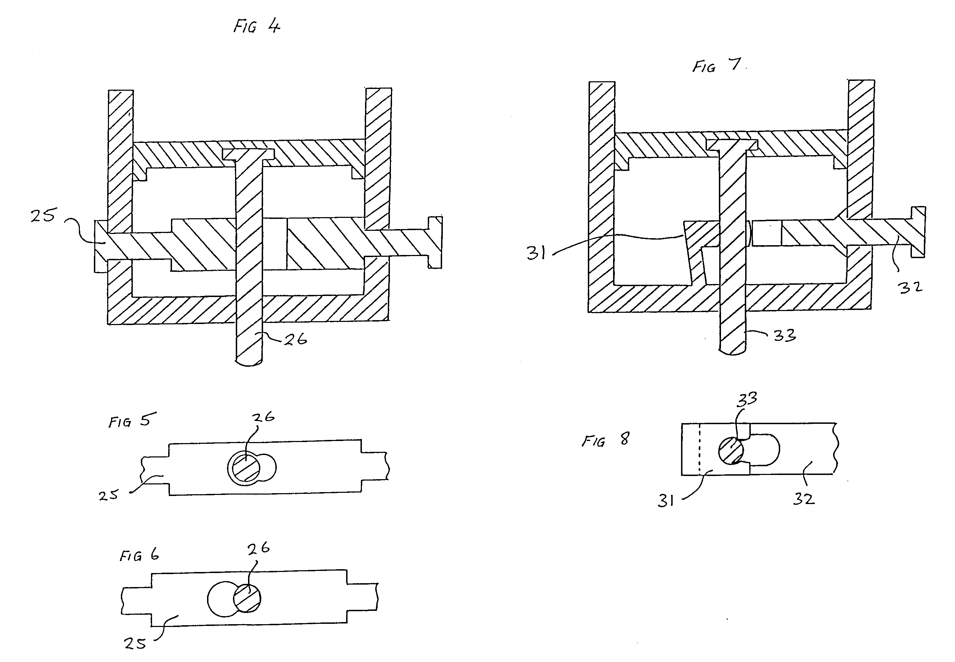

In the regrooving aid shown in Figure 4 the locking means is provided by the pinching action of the sliding member 25. The mechanism is shown in the clamped and released states in Figure 6 and 5 respectively.

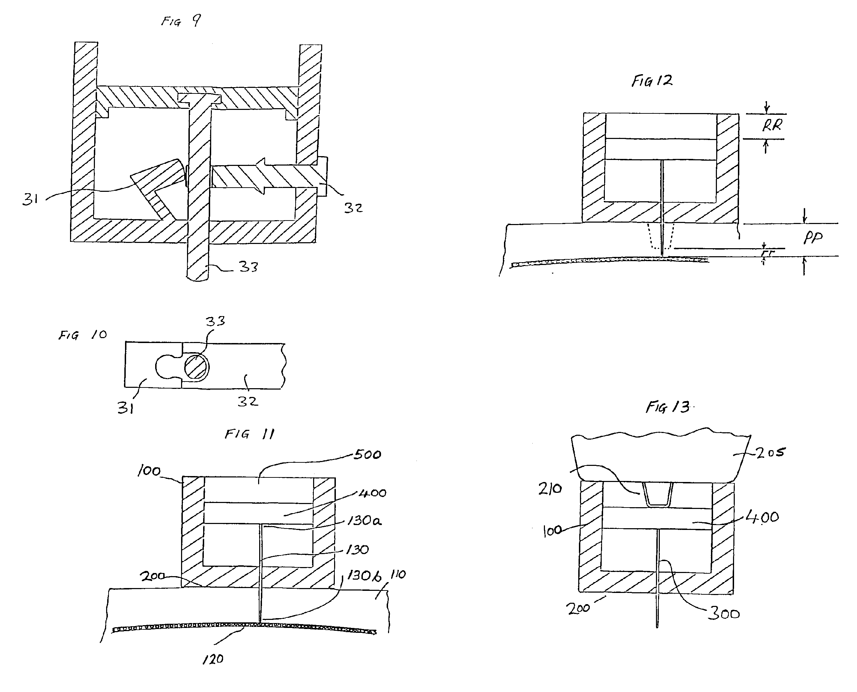

A further embodiment is shown in Figure 7 and 9. Here the probe clamping is provided by the deformable locking part 31 which is operated from outside of the main body by means of the push rod 32. The probe 33 is shown clamped in Figure 8 and released in Figure 10.

Some truck tyres are now available with a special feature in the form of a circular closed-ended aperture moulded into the tread groove base at certain positions to serve as a regroove depth indicator. A regrooving tool having a blade depth corresponding to the distance between the tread surface worn to 2-3mm remaining pattern depth and the bottom of the aforementioned regroove depth indicator will be correctly set for regrooving the tyre. The regrooving aid of the present invention having a narrow probe, for example less than 3mm in diameter, can be used with such regroove indicators.

Another regrooving aid according to the present invention is shown in Figure 11.

This embodiment has a probe 130 having a pointed tip 130b for penetrating a tyre tread 110 down to the depth of the outermost breaker ply 120. This embodiment may be used in cases where in at least some areas of the tread the pattern has worn off completely so that it is difficult to determine how much further wear of the underpattern rubber has occurred.

The elements of the regrooving aid are arranged so that the distance RR between the blade setting member 400 and that part of the main body which contacts the regrooving tool sole plate is equal to the length PP of the probe projecting beneath the main body lower surface 200 minus the predetermined thickness of rubber rr to be left over the breaker ply 120 after regrooving as shown in Figure 12.

The method by which the regrooving aid of Figure 11 may be used for the setting of a regrooving tool blade will now be described.

The regrooving aid is first reset by applying pressure to the upper surface of the setting member 400 to push the probe 130 out to its maximum projectory length. This maximum probe projecting distance exceeds the largest truck tyre underpattern gauges that will normally be encountered. The regrooving aid is then positioned above a bald area of the tyre tread and pressed down so that the pointed probe tip 130b penetrates the tread 100 down to the outermost breaker ply 120. The regrooving aid is then pressed further so that the probe 130 and the setting member 400 slide within the main body 100 until the lower surface 200 of the main body contacts the tread surface. The regrooving aid is removed from the tyre but the relative position of the probe 130 and the setting member 400 within the main body 100 are retained by the friction means between the setting member 400 and the inner wall of the main body 100. Without resetting the regrooving aid this procedure is repeated at all bald sports around the tread. In all cases the position of the setting member will only alter if the probe encounters a rubber thickness which is less than any previous thickness. Thus after the regrooving aid has been used at all points around the tyre surface the retained position of the setting member corresponds to the minimum thickness of tread rubber remaining on the tyre. The regrooving blade 210 can then be set by loosening its clamp and pushing it against the setting member 400 through the aperture 500 until the sole plate of the regrooving tool 205 contacts the main body 100 as shown in Figure 13.

The clamp is then closed and the regrooving blade is set ready for use.

Thus the regrooving aid of the present invention provides the tyre regroover with a simple and convenient method with which to set the regrooving blade depth and one which ensures that the recommended thickness of rubber is left under the re-cut pattern.

## Claims

1. A tyre regrooving aid comprising a main body (1) having a lower surface (2) for contacting a tyre tread surface and a probe (3) having a first end (3b) having a tip projecting beneath the lower surface (2) of the main body (1), the probe (3) being slidably mounted in the main body (1) characterised by the main body (1) having an aperture (5) to accommodate a tyre regrooving tool blade adjacent to an abutment to contact the regrooving tool body, the probe (3) having a second end (3a) operatively connected to a movable regrooving blade setting member (4) adjacent to the aperture (5), the setting member (4) having means to retain its relative position to the main body (1) corresponding to the probe projecting distance measured between the probe tip (3b) and the lower surface (2) contacting the tread surface when the regrooving aid is removed from the tyre so that the dimensional relationship between the setting member (4) and the probe (3) provides that the regrooving blade setting distance is that required to regroove a tyre and a rebrooving tool can have its blade depth set by inserting the blade into the aperture (5) to contact the setting member (4).

2. A tyre regrooving aid according to Claim 1 characterised in that the means of retaining movement of the setting member (4) relative to the main body (1) has a different degree of retention in the direction (A) corresponding to a reduction in probe projecting distance to the direction (B) corresponding to an increase in probe projecting distance.

3. A tyre regrooving aid according to Claim 1 or 2 characterised in that the means for retaining the relative positions is between the setting member (4) and the main body (1).

4. A tyre regrooving aid according to Claim 1 or 2 characterised in that the means for retaining the relative positions is between the probe (3) and the main body (1).

5. A tyre regrooving aid according to any of claims 1-4 characterised in that the means for retaining the relative positions is by friction.

6. A tyre regrooving aid according to Claim 5 characterised in that the friction is provided by teeth on the main body (1) which engage with similar shaped teeth on the other part.

7. A tyre regrooving aid according to any of claims 1-4 characterised in that the means for retaining the relative positions is by means of a mechanical lock capable of being operated from outside the main body (1).

8. A tyre regrooving aid according to any of claims 1-7 characterised in that the the regrooving blade setting member (4) is integral with the second end of the probe (3a).

9. A tyre regrooving aid according to any of claims 1-8 characterised in that the probe first end (3b) has a blunt tip for contacting the base of a tyre tread pattern.

10. A tyre regrooving aid according to claim 9 characterised in that the dimensional relationship between the setting member (4) and the probe (3) provides that the regrooving blade setting distance (R) is equal to the probe projecting length (P) plus the desired regrooving depth (r).

11. A tyre regrooving aid according to claim 9 characterised in that the dimensional relationship between the probe and the setting member provides that the regrooving blade setting distance (R) is equal to the probe projecting length (P).

12. A tyre regrooving aid according to any of claims 9-11 characterised in that the probe tip (3b) is rounded so that it may slide along the base of a tyre tread groove.

13. A tyre regrooving aid according to any of claims 9-11 characterised in that the probe tip (3b) comprises a roller ball.

14. A tyre regrooving aid according to any of claims 1-8 characterised in that the probe first end (3b) has a pointed tip for penetrating a tyre tread to the depth of the outermost breaker ply.

15. A tyre regrooving aid according to claim 14 characterised in that the dimensional relationship between the setting member (4) and the probe (3) provides that the regrooving blade setting distance (RR) is equal to the probe projecting distance (PP) minus the thickness of rubber (rr) to be left over the breaker after regrooving.

## Patentansprüche

1. Eine Reifenprofilerneuerungshilfe mit einem Hauptkörper (1), der eine untere Fläche (2) zum Berühren einer Reifenlaufflächenoberfläche besitzt, und einem Fühler (3) mit einem ersten Ende (3b), das eine unterhalb der unteren Fläche (2) des Hauptkörpers (1) vorstehende Spitze aufweist, wobei der Fühler (3) gleitbar im Hauptkörper (1) angebracht ist,
dadurch **gekennzeichnet,**
daß der Hauptkörper (1) eine Öffnung (5) besitzt, um eine Reifenprofilerneuerungswerkzeugklinge benachbart einem Widerlager aufzunehmen und somit den Profilerneuerungswerkzeugkörper zu berühren, der Fühler (3) ein zweites Ende (3a) besitzt, das wirksam mit einem bewegbaren Profilerneuerungsklingeneinstellbauteil (4) benachbart der Öffnung (5) verbunden ist, das Einstellbauteil (4) Mittel aufweist, um seine relative Position zum Hauptkörper (1) zu halten, und zwar entsprechend dem Fühlervorstehabstand, der gemessen wird zwischen der Fühlerspitze (3b) und der unteren Fläche (2), welche die Laufflächenoberfläche berührt, wenn die Profilerneuerungshilfe vom Reifen entfernt wird, so daß die Abmessungsbeziehung zwischen dem Einstellbauteil (4) und dem Fühler (3) dafür sorgt, daß der Profilerneuerungsklingeneinstellabstand derjenige ist, der erforderlich ist, um das Profil eines Reifens zu erneuern, und die Klingentiefe eines Profilerneuerungswerkzeugs eingestellt werden kann, indem die Klinge in die Öffnung (5) hinein eingesetzt wird, um das Einstellbauteil (4) zu berühren.

2. Eine Reifenprofilerneuerungshilfe nach Anspruch 1,
dadurch **gekennzeichnet,**
daß das Mittel zum Halten einer Bewegung des Einstellbauteils (4) relativ zum Hauptkörper (1) einen unterschiedlichen Haltegrad in die Richtung (A), die einer Reduzierung im Fühlervorstehabstand entspricht, als in die Richtung (B), die einem Anstieg im Fühlervorstehabstand entspricht, besitzt.

3. Eine Reifenprofilerneuerungshilfe nach Anspruch 1 oder 2,
dadurch **gekennzeichnet,**
daß das Mittel zum Halten der relativen Positionen zwischen dem Einstellbauteil (4) und dem Hauptkörper (1) vorliegt.

4. Eine Reifenprofilerneuerungshilfe nach Anspruch 1 oder 2,
dadurch **gekennzeichnet,**
daß das Mittel zum Halten der relativen Positionen zwischen dem Fühler (3) und dem Hauptkörper (1) vorliegt.

5. Eine Reifenprofilerneuerungshilfe nach einem der Ansprüche 1 bis 4,
dadurch **gekennzeichnet,**
daß das Mittel zum Halten der relativen Positionen Reibung ist.

6. Eine Reifenprofilerneuerungshilfe nach Anspruch 5,
dadurch **gekennzeichnet,**
daß die Reibung durch Zähne auf dem Hauptkörper (1) versehen wird, welche sich mit ähnlichen geformten Zähnen auf dem anderen Teil in Eingriff befinden.

7. Eine Reifenprofilerneuerungshilfe nach einem der Ansprüche 1 bis 4,
dadurch **gekennzeichnet,**
daß das Mittel zum Halten der relativen Positionen mittels einer mechanischen Verriegelung vorliegt, die in der Lage ist, von außerhalb des Hauptkörpers (1) betrieben zu werden.

8. Eine Reifenprofilerneuerungshilfe nach einem der Ansprüche 1 bis 7,
dadurch **gekennzeichnet,**
daß das Profilerneuerungsklingeneinstellbauteil (4) einstückig mit dem zweiten Ende des Fühlers (3a) vorliegt.

9. Eine Reifenprofilerneuerungshilfe nach einem der Ansprüche 1 bis 8,
dadurch **gekennzeichnet,**
daß das erste Ende (3b) des Fühlers eine abgestumpfte Spitze zum Berühren des Grunds eines Reifenlaufflächenprofils besitzt.

10. Eine Reifenprofilerneuerungshilfe nach Anspruch 9,
dadurch **gekennzeichnet,**
daß die Abmessungsbeziehung zwischen dem Einstellbauteil (4) und dem Fühler (3) dafür sorgt, daß der Profilerneuerungsklingeneinstellabstand (R) gleich der Fühlervorstehlänge (P) plus der erwünschten Profilerneuerungstiefe (r) ist.

11. Eine Reifenprofilerneuerungshilfe nach Anspruch 9,
dadurch **gekennzeichnet,**
daß die Abmessungsbeziehung zwischen dem Fühler und dem Einstellbauteil dafür sorgt, daß der Profilerneuerungsklingeneinstellabstand (R) gleich der Fühlervorstehlänge (P) ist.

12. Eine Reifenprofilerneuerungshilfe nach einem der Ansprüche 9 bis 11,
dadurch **gekennzeichnet,**
daß die Fühlerspitze (3b) gerundet ist, so daß sie entlang des Grunds einer Reifenlaufflächennut gleiten kann.

13. Eine Reifenprofilerneuerungshilfe nach einem der Ansprüche 9 bis 11,
dadurch **gekennzeichnet,**
daß die Fühlerspitze (3b) eine Rollkugel umfaßt.

14. Eine Reifenprofilerneuerungshilfe nach einem der Ansprüche 1 bis 8,
dadurch **gekennzeichnet,**
daß das erste Ende des Fühlers (3b) eine zugespitzte Spitze besitzt, die eine Reifenlauffläche zur Tiefe der äußersten Breakerlage durchdringt.

15. Eine Reifenprofilerneuerungshilfe nach Anspruch 14,
dadurch **gekennzeichnet,**
daß die Abmessungsbeziehung zwischen dem Einstellbauteil (4) und dem Fühler (3) dafür sorgt, daß der Profilerneuerungsklingeneinstellabstand (RR) gleich dem Fühlervorstehabstand (PP) minus der Gummidicke (rr) ist, die über dem Breaker nach einer Profilerneuerung zu belassen ist.

## Revendications

1. Accessoire de rainurage de pneumatique comprenant un corps principal (1) ayant une surface inférieure (2) destinée à être au contact d'une surface de la bande de roulement du pneumatique, et une sonde (3) ayant une première extrémité (3b) dont un bout dépasse sous la surface inférieure (2) du corps principal (1), la sonde (3) étant montée afin qu'elle puisse coulisser dans le corps principal (1), caractérisé en ce que le corps principal (1) a un orifice (5) destiné à loger une lame d'outil de rainurage de pneumatique près d'une butée destinée à être au contact du corps de l'outil de rainurage, la sonde (3) ayant une seconde extrémité (3a) raccordée pendant le fonctionnement à un organe mobile (4) de réglage de lame de rainurage près de l'orifice (5), l'organe de réglage (4) ayant un dispositif destiné à maintenir sa position relative par rapport au corps principal (1) d'une manière correspondant à la distance de saillie de la sonde mesurée entre le bout (3b) de la sonde et la surface inférieure (2) qui est au contact de la surface de la bande de roulement lorsque l'accessoire de rainurage est retiré du pneumatique, si bien que la relation de dimension entre l'organe de réglage (4) et la sonde (3) assure l'égalité entre la distance de réglage de la lame de rainurage et la distance nécessaire au rainurage d'un pneumatique, et un outil de rainurage peut avoir sa profondeur de lame réglée par introduction de la lame dans l'orifice (5) afin qu'elle soit au contact de l'organe de réglage (4).

2. Accessoire de rainurage de pneumatique selon la revendication 1, caractérisé en ce que le dispositif destiné à limiter le déplacement de l'organe de réglage (4) par rapport au corps principal (1) a des degrés différents de limitation dans le sens (A) correspondant à une réduction de la distance de saillie de la sonde et le sens (B) correspondant à une augmentation de cette distance de saillie.

3. Accessoire de rainurage de pneumatique selon la revendication 1 ou 2, caractérisé en ce que le dispositif destiné à maintenir les positions relatives est compris entre l'organe de réglage (4) et le corps principal (1).

4. Accessoire de rainurage de pneumatique selon la revendication 1 ou 2, caractérisé en ce que le dispositif destiné à maintenir les positions relatives est compris entre la sonde (3) et le corps principal (1).

5. Accessoire de rainurage de pneumatique selon l'une quelconque des revendications 1 à 4, caractérisé en ce que le dispositif destiné à maintenir les positions relatives travaille par friction.

6. Accessoire de rainurage de pneumatique selon la revendication 5, caractérisé en ce que le frottement est réalisé entre des dents du corps principal (1) qui coopèrent avec des dents de forme analogue de l'autre partie.

7. Accessoire de rainurage de pneumatique selon l'une quelconque des revendications 1 à 4, caractérisé en ce que le dispositif destiné à maintenir les positions relatives met en oeuvre un verrou mécanique qui peut être commandé depuis l'extérieur du corps principal (1).

8. Accessoire de rainurage de pneumatique selon l'une quelconque des revendications 1 à 7, caractérisé en ce que l'organe (4) de réglage de lame de rainurage est solidaire de la seconde extrémité de la sonde (3a).

9. Accessoire de rainurage de pneumatique selon l'une quelconque des revendications 1 à 8, caractérisé en ce que la première extrémité (3b) de la sonde a un bout émoussé destiné à être au contact de la bande d'une sculpture de bande de roulement de pneumatique.

10. Accessoire de rainurage de pneumatique selon la revendication 9, caractérisé en ce que la relation de dimension entre l'organe de réglage (4) et la sonde (3) assure l'égalité entre la distance (R) de réglage de la lame de rainurage et la longueur (P) de saillie de la sonde augmentée de la profondeur voulue de rainurage (r).

11. Accessoire de rainurage de pneumatique selon la revendication 9, caractérisé en ce que la relation de dimension entre la sonde et l'organe de réglage assure l'égalité entre la distance (R) de réglage de la lame de rainurage et la longueur (P) de saillie de la sonde.

12. Accessoire de rainurage de pneumatique selon l'une quelconque des revendications 9 à 11, caractérisé en ce que le bout (3b) de la sonde est arrondi afin qu'il puisse glisser le long de la base d'une gorge de bande de roulement de pneumatique.

13. Accessoire de rainurage de pneumatique selon l'une quelconque des revendications 9 à 11, caractérisé en ce que le bout (3b) de la sonde comporte une bille.

14. Accessoire de rainurage de pneumatique selon l'une quelconque des revendications 1 à 8, caractérisé en ce que la première extrémité (3b) de la sonde a un bout pointu destiné à pénétrer dans une bande de roulement de pneumatique jusqu'à la profondeur de la nappe la plus externe de la nappe-sommet.

15. Accessoire de rainurage de pneumatique selon la revendication 14, caractérisé en ce que la relation de dimension entre l'organe de réglage (4) et la sonde (3) est telle que la distance (RR) de réglage de la lame de rainurage est égale à la distance (PP) de saillie de la sonde réduite de l'épaisseur du caoutchouc (rr) qui doit rester sur le nappe-sommet après le rainurage.
